# EUROPEAN PATENT SPECIFICATION

(11) **EP 3 539 839 B1**
(45) Date of publication and mention of the grant of the patent: **04.05.2022**
(21) Application number: 18161468.6
(22) Date of filing: 13.03.2018
(51) Int. Cl.: B60W 50/14, B60W 40/06, G01C 21/00, G08G 1/00

(54) **COMPUTER-IMPLEMENTED METHOD AND SYSTEM FOR PROCESSING DATA RELATED TO A MOTOR VEHICLE**
COMPUTERIMPLEMENTIERTES VERFAHREN UND SYSTEM ZUR VERARBEITUNG VON DATEN IN BEZUG AUF EIN KRAFTFAHRZEUG
PROCÉDÉ MIS EN OEUVRE PAR ORDINATEUR ET SYSTÈME DE TRAITEMENT DE DONNÉES RELATIVES À UN VÉHICULE AUTOMOBILE

(43) Date of publication of application: 18.09.2019
(73) Proprietor: Alpine Electronics, Inc., Tokyo (JP)
(72) Inventor: Loebbert, Johannes, 70567 Stuttgart (DE)
(74) Representative: Schmitt-Nilson Schraud Waibel Wohlfrom Patentanwälte Partnerschaft mbB

(56) References cited:
- WO-A1-2016/142858
- GB-A- 2 552 028
- US-B1- 9 475 494

## Description

The present invention relates to a computer-implemented method and system for processing data related to a motor vehicle, to a computer program product capable to perform such method, and to a motor vehicle configured to communicate with such system.

In many potential scenarios, a monitoring of geographic positions of a vehicle driving on a tour may be performed at the request of the vehicle driver. For example, one such use case may be to record and publish special scenic tours for other drivers who can then copy the tour data into their vehicle head unit and follow the tour at another time with their vehicle.

For example, a potential implementation employs a headunit which records GPS (Global Positioning System) geographic log data, and the user of the vehicle uploads the recorded data to an internet site. Optionally, the user rates a difficulty of the track or tour according to some rating scheme (e.g. easy, moderate, difficult, expert). Other users may download tours according to their desire and follow the tour with their vehicle. A potential disadvantage may be that the rating is based on subjective judgment of the recording driver, so that the rating might not match the skills/experience of other users. Particularly in relation with recorded off-road tracks, there may be a risk that other users might try to follow tracks which are too difficult and end up in dangerous situations, cause damage to their car or even get injured.

GB 2 552 028 A discloses a vehicle system determining a difficulty rating associated with an off-road route and being indicative of the difficulty a vehicle experiences in traversing a terrain (e.g. gravel, mud, sand, rock, ice, snow). The method involves obtaining vehicle sensor data sampled over a period of time as the vehicle travels along the route, analysing said data and determining one or more characteristics associated with the data, predicting the type of terrain being traversed by the vehicle and calculating a difficulty rating / score using the one or more determined characteristics and predicted terrain type. The characteristics associated with the sensor data may be a rolling resistance force, a calculated tractive force, an aerodynamic drag, an inertial resistance of the vehicle. The sensor data could be engine torque, a gearbox state, a differential state, a longitudinal or lateral acceleration or pitch, roll or yaw angles. The sensor data may additionally be associated with location data obtained, for example, using a Global Positioning System (GPS). Off-road route information comprising the determined characteristic features and the calculated difficulty rating may be uploaded to a remotely located networked server, comprising a database of off-road vehicle routes and associated characteristic feature data and difficulty ratings, via a shared communications network, such as the internet. Data stored in the remotely located network server may be remotely accessible to other vehicles.

It is thus an object of the present invention to provide a method and system for processing data related to a motor vehicle which avoids the above mentioned drawbacks and is capable of increasing safety by preventing such dangerous situations, particularly in situations where the vehicle potentially follows an off-road track.

The invention relates to a computer-implemented method and system for processing data related to a motor vehicle according to the appended claims. The invention further relates to a computer program product capable to perform such method, and to a motor vehicle configured to communicate with such system, as specified in the appended claims. Embodiments thereof are disclosed herein below and in the dependent claims.

According to a first aspect, there is disclosed a computer-implemented method for processing data related to a motor vehicle comprising: retrieving, with respect to a first vehicle, first data from a database which are indicative of geographic positions of the first vehicle recorded during motion of the first vehicle on a first track, retrieving second data from the database which are indicative of at least one roll and pitch angle of the first vehicle recorded during the motion of the first vehicle on the first track and associated with the first data, providing, by a second processing device of a second vehicle, which is a motor vehicle and different from the first vehicle, at least one technical correlation between the retrieved second data and one or more vehicle specific technical parameters associated with the second vehicle, and providing, by the second processing device of the second vehicle, information to a user interface of the second vehicle which is indicative of the at least one technical correlation. Preferably, the computer-implemented method for processing data related to a motor vehicle comprises: receiving, by a first processing device, with respect to a first vehicle, which is a motor vehicle, first data which are indicative of geographic positions of the first vehicle during motion of the first vehicle on a first track, receiving, by the first processing device, with respect to the first vehicle second data which are indicative of at least one roll and pitch angle of the first vehicle during the motion of the first vehicle on the first track, recording, by the first processing device, the first and second data in at least one database for a period of time of the motion of the first vehicle on the first track such that the second data are associated with a geographic position of the first vehicle at which the respective second data has been measured, and providing an interface for a second processing device of a second motor vehicle,which is different from the first vehicle, for retrieving the first and second data from the database to the second processing device of the second vehicle for providing information to a user interface of the second vehicle based on the retrieved first and second data.

According to a further aspect, there is disclosed a system for processing data related to a motor vehicle comprising a processing device configured to retrieve, with respect to a first vehicle which is a motor vehicle, from a database first data which are indicative of geographic positions of the first vehicle recorded during motion of the first vehicle on a first track, the processing device configured to retrieve second data from the database which are indicative of at least one roll and pitch angle of the first vehicle recorded during the motion of the first vehicle on the first track and associated with the first data. The processing device is configured to provide for a second vehicle, which is a motor vehicle and different from the first vehicle, at least one technical correlation between the retrieved second data and one or more vehicle specific technical parameters associated with the second vehicle, wherein the processing device is configured to provide information to a user interface of the second vehicle which is indicative of the at least one technical correlation.

According to another aspect, there is disclosed a motor vehicle comprising a control unit which at least in part comprises, or is configured to communicate with, a system as described above, and in more detail herein below.

The invention provides the advantage that, for example, GPS geographic log data may be received by a first processing device, such as implemented in a web server accessible through the internet, and the user of the first vehicle uploads the recorded data to a database on the web server, e.g. accessible through an internet site. Optionally, the user may rate a difficulty of the track according to some rating scheme (e.g. easy, moderate, difficult, expert). Other users, such as the user of the second vehicle, may download tracks according to their desire and follow the track with their vehicle. Since the downloaded track related data contain some information about roll and pitch angle of the first vehicle measured during driving on the downloaded, the rating may be based on objective judgment with respect to the first vehicle in relation to the second vehicle, so that it may be better evaluated whether the rating with respect to the first vehicle matches the capabilities of the second vehicle reflected in the one or more vehicle specific technical parameters associated with the second vehicle. For example, it may be evaluated whether a maximum roll and pitch angle of the second vehicle complies with a recorded maximum roll and pitch angle recorded for the first vehicle when driving on the first track. With such information, a dangerous situation may be prevented, particularly in situations where the second vehicle potentially follows the first track which the first vehicle previously used, if the maximum roll and pitch angle of the second vehicle (e.g. specified in a vehicle spec of the second vehicle) equals or is greater than a maximum roll and pitch angle recorded for the first vehicle during driving on the first track. This is particularly advantageous in relation with off-road tracks, where high roll and pitch angles for the respective vehicle may occur. Based on such objective information on a human machine interface of the second vehicle, the risk may be reduced or prevented that other users might try to follow tracks which are too difficult or inappropriate for their vehicle and end up in dangerous situations, cause damage to their vehicle or even get injured. Motor vehicles, such as off-road terrain motor vehicles, can be quite different in their technical capabilities, such as regarding roll and pitch angles, motor torque, traction on loose ground, and other properties which can be of relevance when driving on an off-road track.

According to another aspect, there is provided a computer program product comprising software code sections which are configured to perform a method according to the invention as described herein. In particular, such computer program may be implemented in principle in any processing device which is appropriate to perform the respective function. Such processing device, and/or the first and second processing devices as described herein, may be, for example, implemented in, or part of, one or more processors, e.g. of one or more server computers and/or one or more computers (such as of an ECU, "Electronic Control Unit") of a vehicle. Further, such processing device may be a separate component, or may be a distributed system using one or more processors and/or integrated circuits. The computer program may be stored on a computer readable medium.

According to an embodiment, at least part of at least one of the first and second processing devices and database are respectively implemented in one or more computer system resources accessible through the Internet. Such computer system resources may be, for example, implemented in, or part of, one or more processors, e.g. comprised in one or more server computers, or may be a separate component, or may be a distributed system (e.g. connected through the Internet or another network) using one or more processors and/or integrated circuits. According to an embodiment, at least part of at least one of the processing device of the system as described herein and database are respectively implemented in one or more computer system resources accessible through the Internet. In a particular embodiment, they can be respectively implemented on a server computer system accessible through the Internet.

In the above terminology and as used herein below, "first", "second", "third", etc. are not meant to designate any temporal order of actions, components or occurrences, but are simply used to distinguish different entities, such as the users, vehicles, processing devices, and data, etc. from each other.

According to an embodiment of the first aspect, the second data are additionally indicative of at least one of: a motor torque, a vehicle speed, a fuel range, a steering wheel angle, a driving direction, brake condition, and motion of the first vehicle without wheel rotation during motion of the first vehicle on the first track. With such additional vehicle specific technical parameters, the correlation information provided to the user via the user interface of the second vehicle may be further enhanced.

According to an embodiment, the method according to the second aspect further comprises providing, by the second processing device of the second vehicle, the information to the user interface of the second vehicle such that the user can select on the user interface one of a plurality of second tracks for the second vehicle to be driven along based on the provided information. Advantageously, the user can select from a plurality of potential track for his or her vehicle based on objective information provided on the basis of a track driven by a first vehicle and associated data related to roll and pitch angles on this track.

According to an embodiment of the method according to the second aspect, the one or more vehicle specific technical parameters include at least one of: a maximum roll and pitch angle, a maximum motor torque, a maximum fuel range, a maximum steering wheel angle, a maximum brake force, and a maximum vehicle speed for the second vehicle, with the respective maximum values specified in a spec of the second vehicle. With such additional vehicle specific technical parameters, the correlation information provided to the user via the user interface of the second vehicle may be further enhanced.

According to an embodiment, the one or more vehicle specific technical parameters include at least one of: a roll and pitch angle, a motor torque, a fuel range, a steering wheel angle, a brake force, and a vehicle speed recorded for the second vehicle during a previous motion track of the second vehicle. For example, the respective parameters may be advantageously respective maximum values, such as a maximum roll and pitch angle, a maximum motor torque, a maximum fuel range, a maximum steering wheel angle, a maximum brake force, and/or a maximum vehicle speed recorded for the second vehicle during a previous motion track of the second vehicle. Accordingly, it can be evaluated based on the respective parameters recorded during a previous motion track of the second vehicle whether the second vehicle is appropriate to follow a new track which has been used by the first vehicle based on a correlation between the respective parameters of first and second vehicle.

The processing device of the second vehicle provides at least part of the information to the user interface of the second vehicle in the form of a dynamic rating based on a user risk level previously entered by the user of the second vehicle. Advantageously, objective and subjective information, such as a risk level, provided by the user of the second vehicle may be combined.

Advantageously, according to an embodiment, in a system as described herein at least part of the processing device configured to retrieve the first and second data and to provide the technical correlation information to the user interface may be comprised in the second vehicle.

According to an embodiment, the one or more vehicle specific technical parameters include at least one of: a maximum roll and pitch angle, a maximum motor torque, a maximum fuel range, a maximum steering wheel angle, a maximum brake force, and a maximum vehicle speed for the second vehicle, with the respective maximum values specified in a spec of the second vehicle.

According to a further embodiment, the one or more vehicle specific technical parameters include at least one of: a roll and pitch angle, a motor torque, a fuel range, a steering wheel angle, a brake force, and a vehicle speed recorded for the second vehicle during a previous motion track of the second vehicle, such as a maximum roll and pitch angle, a maximum motor torque, a maximum fuel range, a maximum steering wheel angle, a maximum brake force, and/or a maximum vehicle speed recorded for the second vehicle during the previous motion track of the second vehicle.

According to an embodiment, the vehicle, the first vehicle and/or the second vehicle, and/or any other vehicle used in connection with the method and system according to aspects of the present invention is an off-road terrain motor vehicle.

Any aspects and embodiments described herein with respect to the method, particularly the method according to the second aspect, can equally be employed in the system with the processing device (employing one or more processors, for example) configured by software and/or hardware appropriately.

Aspects of the invention and embodiments will now be described with reference to the following Figures in which
- Fig. 1: shows a schematic view of a system according to an embodiment of the invention,
- Fig. 2: shows a schematic view of a vehicle in greater detail which is configured according to the system as shown in Fig. 1 according to an embodiment of the invention,
- Fig. 3: shows a flow diagram of a potential data processing procedure according to an embodiment of the invention.

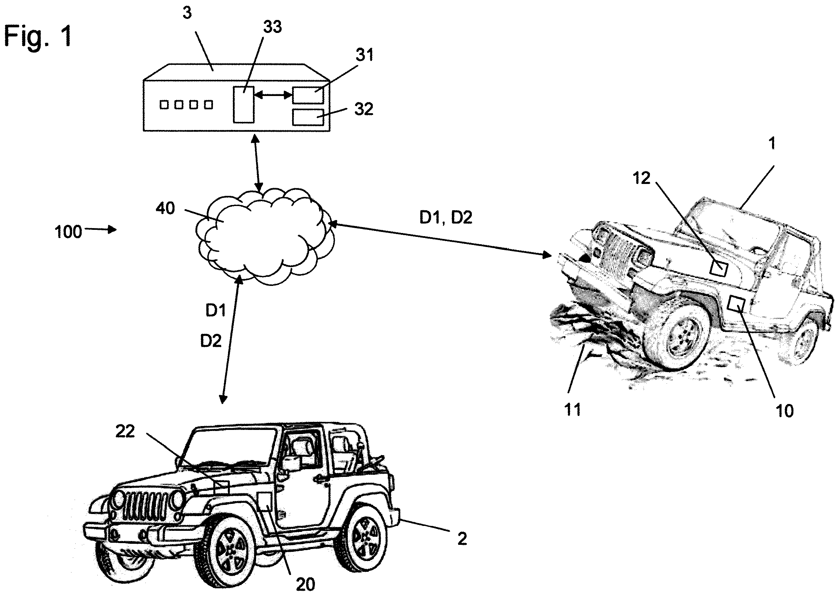

In Fig. 1 there is shown a system 100 for processing data related to a motor vehicle according to an embodiment of the invention. In a potential user scenario, a first vehicle, such as vehicle 1 which is, in this embodiment, an off-road terrain motor vehicle, is driving on a track 11, e.g. an off-road track in which the vehicle 1 undergoes relatively large roll and pitch angles. A roll and pitch angle may be sensed in the vehicle 1, for example, by an appropriate sensor device 12 comprising one or more inclination sensors, as commonly implemented in cars, such as off-road terrain motor cars. The sensor device 12 may also include a GPS sensor for sensing a geographic location of the vehicle 1, as commonly known. A roll and pitch angle may designate a respective roll and pitch angle with respect to a particular reference level, such as a horizontal plane (e.g. horizontal earth ground plane). The one or more sensor devices 12, which may also sense additional technical parameters, as set out in more detail below, are coupled with (e.g. in wired manner or wirelessly) a control unit 10 of the vehicle 1, which may be, or may be part of, a control unit of the vehicle 1, such as an ECU (electronic control unit) or head unit of the vehicle 1. The control unit 10, as set out in more detail below, may function as a receiver and/or transmitter which receives and/or transmits the data D1 and D2, processes the parameter(s) of the sensor device(s) 12, and provides any processed information to a user interface, such as provided on a display device of the vehicle 1 (e.g. on a touchscreen of the head unit of vehicle 1).

In a data collection process, the control unit 10 transmits data D1 (herein designated as first data), which are indicative of geographic positions of the vehicle 1 during motion of the vehicle 1 on the track 11, to one or more processing devices 31, 32 located on a server computer 3, e.g. accessible through the internet 40. Particularly, the one or more processing devices 31, 32 and the server computer 3 are located remotely from the respective vehicle, such as vehicles 1 and 2. For example, the server computer 3 is forming part of a remote server computer system accessible by the vehicles 1 and 2 through the Internet 40, e.g. using respective wireless communication devices installed on the vehicle (e.g. using mobile telecommunications network(s)), as commonly known in the art.

Accordingly, the one or more processing devices 31, 32 receive the first data D1 from the vehicle 1 and receive data D2 (herein designated second data) from the vehicle 1 which are indicative of at least one roll and pitch angle of the vehicle 1 sensed by the sensor device 12 during the motion of the vehicle 1 along the track 11. For example, the at least one roll and pitch angle of the vehicle 1 may comprise a maximum value of the roll and pitch angle sensed during the motion of the vehicle 1 along the track 11, or may be a plurality of roll and pitch angles sensed during the motion of the vehicle 1 along the track 11, e.g. at particular geographic locations along the track. Other technical parameters related to the vehicle 1, such as vehicle speed, steering angle, etc., as set out in more detail below, may also be included in the data D2. These second data D2 are associated with the first data D1, so that the second data D2 can be assigned to at least one geographic location, such as at least one geographic location indicative of the track 11.

For instance, the processing device 31 then records the first and second data D1, D2 in at least one database 33 provided by the server computer 3 for at least a period of time of the motion of the vehicle 1 on the track 11 such that the second data D2 are associated with one or more geographic positions of the vehicle 1 (e.g. indicative of the track 11) at which the respective second data D2 has been measured by the sensor device 12. For example, a particular maximum roll and pitch angle sensed by the senor device 12 at a particular GPS position of vehicle 1 is recorded in the database 33 associated with the sensed GPS position.

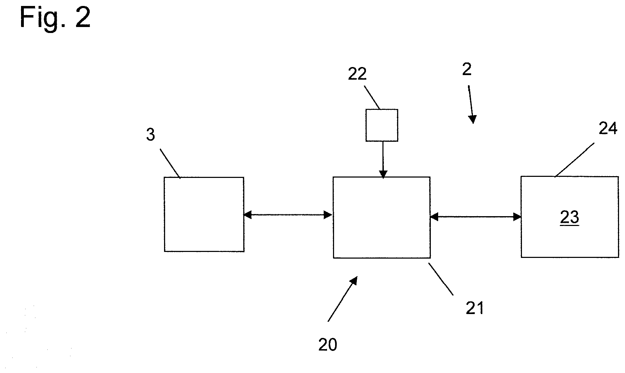

The server computer 3, particularly the one or more processing devices 31, 32, also provide an interface for another vehicle control unit, such as a processing device 21 (cf. Fig. 2) of a second motor vehicle 2. Through the provided interface, e.g. a web interface, and the internet 40 the first and second data D1, D2 recorded with respect to the vehicle 1 may be retrieved from the database 33 to the processing device 21 of the second vehicle 2, which may also be an off-road terrain motor vehicle. For example, the processing device 21 is a processor of a control unit 20 (such as an ECU) of the vehicle 2, which is also coupled with one or more sensor devices 22 (such as inclination sensor and GPS sensor) of the vehicle 2. The vehicle 2 further includes a display device 24 which is appropriate for displaying a user interface 23 with information processed by the processing device 21 based on the retrieved data D1 and D2.

In addition to respective roll and pitch angles, the second data D2 are additionally indicative of a motor torque, a vehicle speed, a fuel range, a steering wheel angle, a driving direction, a brake condition, and/or a motion of the vehicle 1 without wheel rotation sensed during motion of the vehicle 1 on the track 11. To this end, the sensor device 12 may include further sensors for measuring the respective parameters, such as speed sensor, fuel sensor, a wheel turn angle sensor, etc., as commonly known with common cars.

As such, according to an embodiment, the control unit 10 of vehicle 1 records GPS log data when driving on the track 11, and uploads the recorded data to the server computer 3 and database 33, respectively. For example, the user of vehicle 1 also rates a subjective difficulty of the track 11 according to some rating scheme (e.g. "easy", "moderate", "difficult", "expert"). This information may be downloaded to the vehicle 2 for making a decision by the user of vehicle 2 whether to follow the track 11 by his or her vehicle 2 (which is different from vehicle 1 and, thus, may have different technical capabilities, such as different maximum roll and pitch angle). Based on such information retrieved from database 33 through an appropriate interface, the user of vehicle 2 may decide whether track 11 is too difficult for his or her vehicle 2 and/or his or her risk level. This may prevent dangerous situations for the vehicle 2 when driving on track 11.

In particular, the processing device 21 of the control unit 20 of vehicle 2 determines or calculates for the vehicle 2 at least one technical correlation between the retrieved second data D2 related to vehicle 1 and one or more vehicle specific technical parameters associated with the vehicle 2. For example, a technical correlation may be a comparison of respective data or values, for instance a comparison of a (e.g., maximum) roll and pitch angle of vehicle 1 sensed during driving on track 11 with a (e.g., maximum) roll and pitch angle of vehicle 2 as defined in a spec of the vehicle 2. Such correlation or comparison may be provided on the user interface 23, e.g. in the form of a listing displayed on the display device 24. The one or more vehicle specific technical parameters of vehicle 2 correlated with the data D2 of vehicle 1 may additionally include at least one of a maximum roll and pitch angle, a maximum motor torque, a maximum fuel range, a maximum steering wheel angle, a maximum brake force, and a maximum vehicle speed for the vehicle 2. The respective maximum values are specified in a spec of the vehicle 2, e.g. by the manufacturer (OEM) of the respective vehicle. Additionally, or alternatively, the one or more vehicle specific technical parameters of vehicle 2 which are processed to be correlated with the data D2 of vehicle 1 may include at least one of a roll and pitch angle, a motor torque, a fuel range, a steering wheel angle, a brake force, and a vehicle speed recorded for the vehicle 2 during a previous motion track of the vehicle 2. In this way, previous experiences of the driver with vehicle 2 when driving on another motion track can be taken into account for a comparison with the second data D2 in relation to the vehicle 1.

Advantageously, according to embodiments of the invention, the control unit 20 of vehicle 2 not only retrieves and stores the GPS data related to track 11 (so-called NMEA data as a standard with common navigation devices), but also additional time based technical information about the vehicle 1 driving on track 11, such as roll and pitch angle of the vehicle 1, potential mismatch between driving direction and steering wheel angle of vehicle 1 during driving, special car situations like activation of the ABS/EPS systems on slippery road, movements of the vehicle without wheel rotation, e.g. when sliding down or sideways a very steep hill. An interested driver of vehicle 2 can download the data D1 and D2 to the vehicle's head unit. The user of vehicle 2 advantageously may not only see the subjective rating of the recording driver of vehicle 1, but the vehicle's control unit may create a dynamic rating based on objective data about the vehicle 2 such as previous experiences of the driver of vehicle 2, maximum allowed roll and pitch angle of the vehicle 2 (and other technical parameters according to the vehicle's spec), and/or risk level of the driver of vehicle 2, such as like "can accept sliding down a hill". Such objective information may be presented to the user of vehicle 2 who can better judge if this track 11 is appropriate for his/her vehicle 2 and experience level. The rating and dynamic comparison could also be done on a web portal, e.g. on server computer 3, e.g. when the user of vehicle 2 uploads previous recordings or parameters. In this case the user's skills may also be compared and a ranking of experience could be displayed to all interested and authorized users of the web site.

Additionally the recording user could define to play specific music titles/music type at predefined points of the route. The user may then download the track information and retrieve at the same time the matching music from a music download portals. The system may also search for similar music styles in the music which is stored in the vehicle's control unit.

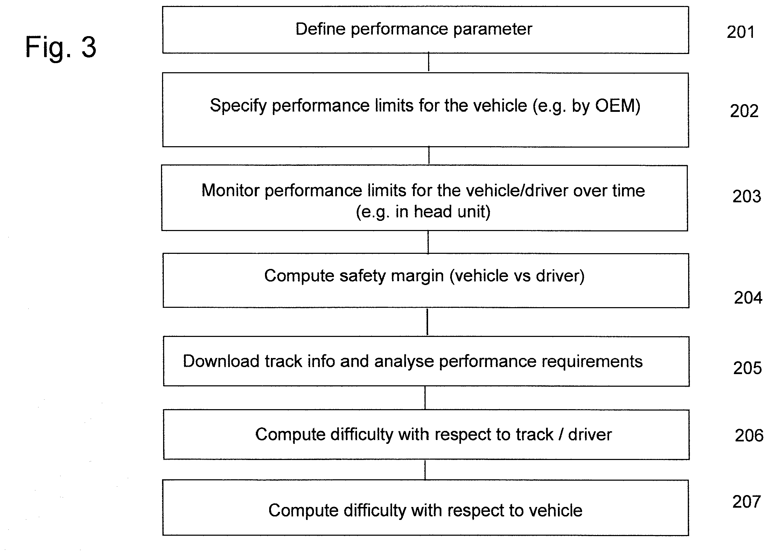

Fig. 3 shows a flow diagram of a potential data processing procedure according to various embodiments of the invention.

In step 201, respective performance parameters may be defined by the driver of vehicle 1 or 2, such as pitch angle, roll angle, required motor torque and fuel range. For these performance parameters, a tailored user interface 23 may be created on the display device 24 of the vehicle, cf. Table 1:

**Table 1**

| **Performance Parameter** | | |
|---|---|---|
| | Min | Max |
| Pitch angle | | |
| Roll angle | | |
| Required motor torque | N.A. | |
| Fuel range | N.A. | |

In step 202, performance limits may be specified for the vehicle 1 or 2, for example in a spec (technical specification) of the vehicle by an OEM (Original Equipment Manufacturer), cf. Table 2. These limits may define respective maximum values which shall never be exceeded when driving on a track.

**Table 2**

| **Performance Parameter - Vehicle** | | |
|---|---|---|
| | Min | Max |
| Pitch angle | -30° | 30° |
| Roll angle | -20° | 20° |
| Required motor torque | N.A. | 284 Nm |
| Fuel range | N.A. | 350 km |

In step 203, performance parameters as defined previously in step 201 may be monitored for the driver of vehicle 1 or 2 over time when driving on a track, e.g. in the vehicle's head unit, cf. Table 3:

**Table 3**

| **Performance Parameter - Driver** | | |
|---|---|---|
| | Min | Max |
| Pitch angle | -20° | 25° |
| Roll angle | -15° | 10° |
| Required motor torque | N.A. | 100 Nm |
| Fuel range | N.A. | 150 km |

In step 204, a safety margin may be computed, cf. Table 4. In the present embodiment, the vehicle's parameters as defined in Table 2 are compared to the driver's parameters as recorded in Table 3.

**Table 4**

| **Performance Parameter - Driver** | | | **Safety margin (Vehicle)** | |
|---|---|---|---|---|
| | Min | Max | Min | Max |
| Pitch angle | -20° | 25° | 33% | 17% |
| Roll angle | -15° | 10° | 25% | 50% |
| Required motor torque | N.A. | 100 Nm | | 65% |
| Fuel range | N.A. | 150 km | | 57% |

In step 205, track information (such as of a vehicle driving on a track) may be downloaded to the vehicle from the server computer 3 and the performance requirements may be analyzed, cf. Table 5:

**Table 5**

| **Performance Parameter** - **Track** | | |
|---|---|---|
| | Min | Max |
| Pitch angle | -25° | 10° |
| Roll angle | -10° | 20° |
| Required motor torque | N.A. | 140 Nm |
| Fuel range | N.A. | 250 km |

In step 206, a difficulty may be defined and computed with respect to the track (comparison of Table 5 with Table 2), cf. Table 6:

**Table 6**

| **Performance Parameter** - **Track** | | | **Safety margin vehicle** | |
|---|---|---|---|---|
| | Min | Max | Min | Max |
| Pitch angle | -25° | 10° | 17% | 67% |
| Roll angle | -10° | 20° | 50% | 0% |
| Required motor torque | N.A. | 140 Nm | N.A. | 51% |
| Fuel range | N.A. | 250 km | N.A. | 29% |

Further, a difficulty may be defined and computed with respect to the driver (comparison of Table 5 with Table 3), cf. Table 7:

**Table 7**

| **Performance Parameter** - **Track** | | | Driver challenge | |
|---|---|---|---|---|
| | Min | Max | | |
| Pitch angle | -25° | 10° | 125% | 40% |
| Roll angle | -10° | 20° | 67% | 200% |
| Required motor torque | N.A. | 140 Nm | N.A. | 140% |
| Fuel range | N.A. | 250 km | N.A. | 167% |

In a step 207, a parameter indicative of a difficulty may be computed. Such determination may comprise a check whether vehicle parameter limits are /are not exceeded. For example, if "hard" parameter limits are defined, the respective track will be rated as "too difficult" if any of these limits is reached or exceeded. It is also possible that the user defines lower "hard limits" for specific parameters, which deviate from any limits defined in the spec.

Potential approaches for computation and classification of overall difficulty may be: Compute difficulty of track based on driver parameters:
Required parameter between 0% and 90% of driver experience: "Easy"
Required parameter between 90% and 140% of driver experience: "Moderate"
Required parameter higher than 140% of driver experience: "Difficult"

## Claims

1. A computer-implemented method for processing data related to a motor vehicle (1), comprising:
- retrieving, with respect to a first vehicle (1), first data (D1) from a database (33) which are indicative of geographic positions of the first vehicle (1) recorded during motion of the first vehicle (1) on a first track (11),
- retrieving second data (D2) from the database (33) which are indicative of at least one roll and pitch angle of the first vehicle (1) recorded during the motion of the first vehicle (1) on the first track (11) and associated with the first data (D1),
- providing, by a processing device (21) of a second vehicle (2), which is a motor vehicle and different from the first vehicle (1), at least one technical correlation between the retrieved second data (D2) and one or more vehicle specific technical parameters associated with the second vehicle (2),
- providing, by the processing device (21) of the second vehicle (2), information to a user interface (23) of the second vehicle (2) which is indicative of the at least one technical correlation,
- **characterized in that** the processing device (21) of the second vehicle (2) provides at least part of the information to the user interface (23) of the second vehicle (2) in the form of a dynamic rating based on a user risk level previously entered by the user of the second vehicle (2).

2. The method according to claim 1, further comprising providing, by the processing device (21) of the second vehicle (2), the information to the user interface (23) of the second vehicle (2) such that the user can select on the user interface (23) one of a plurality of second tracks for the second vehicle (2) to be driven along based on the provided information.

3. The method according to claim 1 or 2, wherein the one or more vehicle specific technical parameters include at least one of: a maximum roll and pitch angle, a maximum motor torque, a maximum fuel range, a maximum steering wheel angle, a maximum brake force, and a maximum vehicle speed for the second vehicle (2), with the respective maximum values specified in a spec of the second vehicle (2).

4. The method according to one of claims 1 to 3, wherein the one or more vehicle specific technical parameters include at least one of: a roll and pitch angle, a motor torque, a fuel range, a steering wheel angle, a brake force, and a vehicle speed recorded for the second vehicle (2) during a previous motion track of the second vehicle (2).

5. The method according to one of claims 1 to 4, wherein the processing device is a second processing device, the method further comprising:
- receiving, by a first processing device (31), with respect to the first vehicle (1), which is a motor vehicle, the first data (D1),
- receiving, by the first processing device (31), with respect to the first vehicle (1) the second data (D2),
- recording, by the first processing device (31), the first and second data (D1, D2) in the database (33) for a period of time of the motion of the first vehicle (1) on the first track (11) such that the second data (D2) are associated with a geographic position of the first vehicle (1) at which the respective second data (D2) has been measured,
- providing an interface for the second processing device (21) of the second vehicle (2) for retrieving the first and second data (D1, D2) from the database (33) to the second processing device (21) of the second vehicle (2) for providing information to the user interface (23) of the second vehicle (2) based on the retrieved first and second data (D1, D2).

6. The method according to claim 5, wherein the second data (D2) are additionally indicative of at least one of: a motor torque, a vehicle speed, a fuel range, a steering wheel angle, a driving direction, a brake condition, and a motion of the first vehicle without wheel rotation during the motion of the first vehicle (1) on the first track (11).

7. A computer program product comprising software code sections which are configured to perform a method according to one of claims 1 to 6.

8. A system (100) for processing data related to a motor vehicle (1, 2), comprising:
- a processing device (21) configured to retrieve, with respect to a first vehicle (1) which is a motor vehicle, from a database (33) first data (D1) which are indicative of geographic positions of the first vehicle (1) recorded during motion of the first vehicle (1) on a first track (11),
- the processing device (21) configured to retrieve second data (D2) from the database (33) which are indicative of at least one roll and pitch angle of the first vehicle (1) recorded during the motion of the first vehicle (1) on the first track (11) and associated with the first data (D1),
- the processing device (21) configured to provide for a second vehicle (2), which is a motor vehicle and different from the first vehicle (1), at least one technical correlation between the retrieved second data (D2) and one or more vehicle specific technical parameters associated with the second vehicle (2),
- the processing device (21) configured to provide information to a user interface (23) of the second vehicle (2) which is indicative of the at least one technical correlation,
- **characterized in that** the processing device (21) is configured to provide at least part of the information to the user interface (23) of the second vehicle (2) in the form of a dynamic rating based on a user risk level previously entered by the user of the second vehicle (2).

9. The system according to claim 8, wherein at least part of the processing device (21) is comprised in the second vehicle (2).

10. The system according to one of claims 8 to 9, wherein at least part of at least one of the processing device (21) and database (33) are respectively implemented in one or more computer system resources (3) accessible through the Internet (40), particularly are implemented on a server computer system accessible through the Internet (40).

11. The system according to one of claims 8 to 10, wherein the one or more vehicle specific technical parameters include at least one of: a maximum roll and pitch angle, a maximum motor torque, a maximum fuel range, a maximum steering wheel angle, a maximum brake force, and a maximum vehicle speed for the second vehicle (2), with the respective maximum values specified in a spec of the second vehicle (2).

12. The system according to one of claims 8 to 11, wherein the one or more vehicle specific technical parameters include at least one of: a roll and pitch angle, a motor torque, a fuel range, a steering wheel angle, a brake force, and a vehicle speed recorded for the second vehicle (2) during a previous motion track of the second vehicle (2).

13. A motor vehicle (2) comprising a control unit (20) which comprises a system (100) according to one of claims 8 to 12.

## Patentansprüche

1. Computerimplementiertes Verfahren zum Verarbeiten von Daten in Bezug auf ein Kraftfahrzeug (1), das aufweist:
- Abrufen, in Bezug auf ein erstes Fahrzeug (1), von ersten Daten (D1) aus einer Datenbank (33), die geografische Positionen des ersten Fahrzeugs (1) angeben, die während der Bewegung des ersten Fahrzeugs (1) auf einer ersten Route (11) aufgezeichnet wurden,
- Abrufen von zweiten Daten (D2) aus der Datenbank (33), die mindestens einen Roll- und Nickwinkel des ersten Fahrzeugs (1) angeben, der während der Bewegung des ersten Fahrzeugs (1) auf der ersten Route (11) aufgezeichnet wurde und den ersten Daten (D1) zugeordnet ist,
- Bereitstellen, durch eine Verarbeitungsvorrichtung (21) eines zweiten Fahrzeugs (2), das ein Kraftfahrzeug ist und sich von dem ersten Fahrzeug (1) unterscheidet, von mindestens einer technischen Korrelation zwischen den abgerufenen zweiten Daten (D2) und einem oder mehreren fahrzeugspezifischen technischen Parametern, die dem zweiten Fahrzeug (2) zugeordnet sind,
- Bereitstellen, durch die Verarbeitungsvorrichtung (21) des zweiten Fahrzeugs (2), von Information, die die mindestens eine technische Korrelation angibt, an eine Benutzerschnittstelle (23) des zweiten Fahrzeugs (2),
- **dadurch gekennzeichnet, dass** die Verarbeitungsvorrichtung (21) des zweiten Fahrzeugs (2) der Benutzerschnittstelle (23) des zweiten Fahrzeugs (2) mindestens einen Teil der Information in Form einer dynamischen Bewertung auf Grundlage eines zuvor vom Benutzer des zweiten Fahrzeugs (2) eingegebenen Benutzerrisikoniveaus bereitstellt.

2. Verfahren nach Anspruch 1, das ferner das Bereitstellen, durch die Verarbeitungsvorrichtung (21) des zweiten Fahrzeugs (2), der Information an die Benutzerschnittstelle (23) des zweiten Fahrzeugs (2) derart aufweist, dass der Benutzer auf der Benutzerschnittstelle (23) eine einer Mehrzahl von zweiten Routen für das zweite Fahrzeug (2), entlang der gefahren werden soll, auf Grundlage der bereitgestellten Information auswählen kann.

3. Verfahren nach Anspruch 1 oder 2, wobei der eine oder die mehreren fahrzeugspezifischen technischen Parameter mindestens einen umfassen von:
einem maximalen Roll- und Nickwinkel, einem maximalen Motordrehmoment, einer maximalen Kraftstoffreichweite, einem maximalen Lenkradwinkel, einer maximalen Bremskraft und einer maximalen Fahrzeuggeschwindigkeit für das zweite Fahrzeug (2), wobei die entsprechenden maximalen Werte in einer Spezifikation des zweiten Fahrzeugs (2) spezifiziert sind.

4. Verfahren nach einem der Ansprüche 1 bis 3, wobei der eine oder die mehreren fahrzeugspezifischen technischen Parameter mindestens einen umfassen von:
einem Roll- und Nickwinkel, einem Motordrehmoment, einer Kraftstoffreichweite,
einem Lenkradwinkel, einer Bremskraft und einer Fahrzeuggeschwindigkeit, die während einer vorherigen Bewegungsroute des zweiten Fahrzeugs (2) für das zweite Fahrzeug (2) aufgezeichnet wurden.

5. Verfahren nach einem der Ansprüche 1 bis 4, wobei die Verarbeitungsvorrichtung eine zweite Verarbeitungsvorrichtung ist, wobei das Verfahren ferner aufweist:
- Empfangen, durch eine erste Verarbeitungsvorrichtung (31), in Bezug auf das erste Fahrzeug (1), das ein Kraftfahrzeug ist, der ersten Daten (D1),
- Empfangen, durch die erste Verarbeitungsvorrichtung (31), in Bezug auf das erste Fahrzeug (1), der zweiten Daten (D2),
- Aufzeichnen, durch die erste Verarbeitungsvorrichtung (31), der ersten und zweiten Daten (D1, D2) in der Datenbank (33) für eine Zeitdauer der Bewegung des ersten Fahrzeugs (1) auf der ersten Route (11) derart, dass die zweiten Daten (D2) einer geografischen Position des ersten Fahrzeugs (1) zugeordnet sind, an der die entsprechenden zweiten Daten (D2) gemessen wurden,
- Bereitstellen einer Schnittstelle für die zweite Verarbeitungsvorrichtung (21) des zweiten Fahrzeugs (3) zum Liefern der ersten und zweiten Daten (D1, D2) von der Datenbank (33) an die zweite Verarbeitungsvorrichtung (21) des zweiten Fahrzeugs (2) zum Bereitstellen von Information an die Benutzerschnittstelle (23) des zweiten Fahrzeugs (2) auf Grundlage der gelieferten ersten und zweiten Daten (D1, D2).

6. Verfahren nach Anspruch 5, wobei die zweiten Daten (D2) zusätzlich mindestens eines angeben von: einem Motordrehmoment, einer Fahrzeuggeschwindigkeit, einer Kraftstoffreichweite, eines Lenkradwinkels, einer Fahrrichtung, eines Bremszustands und einer Bewegung des ersten Fahrzeugs ohne Radrotation während der Bewegung des ersten Fahrzeugs (1) auf der ersten Route (11).

7. Computerprogrammprodukt, das Softwarecodeabschnitte aufweist, die dazu ausgelegt sind, ein Verfahren nach einem der Ansprüche 1 bis 6 auszuführen.

8. System (100) zum Verarbeiten von Daten in Bezug auf ein Kraftfahrzeug (1, 2), das aufweist:
- eine Verarbeitungsvorrichtung (21), die dazu ausgelegt ist, in Bezug auf ein erstes Fahrzeug (1), das ein Kraftfahrzeug ist, aus einer Datenbank (33) erste Daten (D1) abzurufen, die geografische Positionen des ersten Fahrzeugs (1) angeben, die während der Bewegung des ersten Fahrzeugs (1) auf einer ersten Route (11) aufgezeichnet wurden, wobei
- die Verarbeitungsvorrichtung (21) dazu ausgelegt ist, zweite Daten (D2) aus der Datenbank (33) abzurufen, die mindestens einen Roll- und Nickwinkel des ersten Fahrzeugs (1) angeben, der während der Bewegung des ersten Fahrzeugs (1) auf der ersten Route (11) aufgezeichnet wurde und den ersten Daten (D1) zugeordnet ist,
- die Verarbeitungsvorrichtung (21) dazu ausgelegt ist, für ein zweites Fahrzeug (2), das ein Kraftfahrzeug ist und sich von dem ersten Fahrzeug (1) unterscheidet, mindestens eine technische Korrelation zwischen den abgerufenen zweiten Daten (D2) und einem oder mehreren fahrzeugspezifischen technischen Parametern, die dem zweiten Fahrzeug (2) zugeordnet sind, bereitzustellen,
- die Verarbeitungsvorrichtung (21) dazu ausgelegt ist, einer Benutzerschnittstelle (23) des zweiten Fahrzeugs (2) Information bereitzustellen, die die mindestens eine technische Korrelation angibt,
- **dadurch gekennzeichnet, dass** die Verarbeitungsvorrichtung (21) dazu ausgelegt ist, der Benutzerschnittstelle (23) des zweiten Fahrzeugs (2) mindestens einen Teil der Information in Form einer dynamischen Bewertung auf Grundlage eines zuvor durch den Benutzer des zweiten Fahrzeugs (2) eingegebenen Benutzerrisikoniveaus bereitzustellen.

9. System nach Anspruch 8, wobei mindestens ein Teil der Verarbeitungsvorrichtung (21) in dem zweiten Fahrzeug (2) enthalten ist.

10. System nach einem der Ansprüche 8 bis 9, wobei mindestens ein Teil von mindestens einer der Verarbeitungsvorrichtung (21) und der Datenbank (33) entsprechend in einer oder mehreren Computersystemressourcen (3) implementiert ist, auf die über das Internet (40) zugegriffen werden kann, insbesondere auf einem Servercomputersystem implementiert sind, auf das über das Internet (40) zugegriffen werden kann.

11. System nach einem der Ansprüche 8 bis 10, wobei der eine oder die mehreren fahrzeugspezifischen technischen Parameter mindestens einen umfassen von:
einem maximalen Roll- und Nickwinkel, einem maximalen Motordrehmoment, einer maximalen Kraftstoffreichweite, einem maximalen Lenkradwinkel, einer maximalen Bremskraft und einer maximalen Fahrzeuggeschwindigkeit für das zweite Fahrzeug (2), wobei die entsprechenden maximalen Werte in einer Spezifikation des zweiten Fahrzeugs (2) spezifiziert sind.

12. System nach einem der Ansprüche 8 bis 11, wobei der eine oder die mehreren fahrzeugspezifischen technischen Parameter mindestens einen umfassen von:
einem Roll- und Nickwinkel, einem Motordrehmoment, einer Kraftstoffreichweite,
einem Lenkradwinkel, einer Bremskraft und einer Fahrzeuggeschwindigkeit, die während einer vorherigen Bewegungsroute des zweiten Fahrzeugs (2) für das zweite Fahrzeug (2) aufgezeichnet wurden.

13. Kraftfahrzeug (2), das eine Steuereinheit (20) aufweist, die ein System (100) nach einem der Ansprüche 8 bis 12 aufweist.

## Revendications

1. Un procédé mis en œuvre par ordinateur pour traiter des données relatives à un véhicule à moteur (1), comprenant les étapes suivantes consistant à :
- récupérer, en ce qui concerne un premier véhicule (1), des premières données (D1) à partir d'une base de données (33) qui sont indicatives de positions géographiques du premier véhicule (1) enregistrées pendant le mouvement du premier véhicule (1) sur une première voie (11),
- récupérer des deuxièmes données (D2) à partir de la base de données (33) qui sont indicatives d'au moins un angle de roulis et de tangage du premier véhicule (1) enregistrés pendant le mouvement du premier véhicule (1) sur la première voie (11) et associé aux premières données (D1),
- fournir, par un dispositif de traitement (21) d'un deuxième véhicule (2), qui est un véhicule à moteur et différent du premier véhicule (1), au moins une corrélation technique entre les deuxièmes données récupérées (D2) et un ou plusieurs paramètres techniques spécifiques au véhicule associés au deuxième véhicule (2),
- fournir, par le dispositif de traitement (21) du deuxième véhicule (2), une information à une interface utilisateur (23) du deuxième véhicule (2) qui est indicative de l'au moins une corrélation technique,
- **caractérisé en ce que** le dispositif de traitement (21) du deuxième véhicule (2) fournit au moins une partie de l'information à l'interface utilisateur (23) du deuxième véhicule (2) sous la forme d'une notation dynamique basée sur un niveau de risque utilisateur préalablement saisi par l'utilisateur du deuxième véhicule (2).

2. Le procédé selon la revendication 1, comprenant en outre une étape consistant à fournir, par le dispositif de traitement (21) du deuxième véhicule (2), l'information à l'interface utilisateur (23) du deuxième véhicule (2) de sorte que l'utilisateur peut sélectionner sur l'interface utilisateur (23) l'une d'une pluralité de deuxièmes voies pour le deuxième véhicule (2) à conduire sur la base de l'information fournie.

3. Le procédé selon la revendication 1 ou 2, dans lequel le ou les plusieurs paramètres techniques spécifiques au véhicule comprennent au moins l'un parmi : un angle de roulis et de tangage maximum, un couple moteur maximum, une autonomie de carburant maximum, un angle de volant maximum, une force de freinage maximum, et une vitesse de véhicule maximum pour le deuxième véhicule (2), les valeurs maximales respectives étant spécifiées dans une spécification du deuxième véhicule (2).

4. Le procédé selon l'une des revendications 1 à 3, dans lequel le ou les plusieurs paramètres techniques spécifiques au véhicule comprennent au moins l'un parmi : un angle de roulis et de tangage, un couple moteur, une autonomie de carburant, un angle de volant, une force de freinage, et une vitesse de véhicule enregistrée pour le deuxième véhicule (2) au cours d'un mouvement précédent du deuxième véhicule (2).

5. Le procédé selon l'une des revendications 1 à 4, dans lequel le dispositif de traitement est un deuxième dispositif de traitement, le procédé comprenant en outre les étapes suivantes consistant à :
- recevoir, par un premier dispositif de traitement (31), en ce qui concerne le premier véhicule (1), qui est un véhicule à moteur, les premières données (D1),
- recevoir, par le premier dispositif de traitement (31), en ce qui concerne le premier véhicule (1), les deuxièmes données (D2),
- enregistrer, par le premier dispositif de traitement (31), les premières et deuxièmes données (D1, D2) dans la base de données (33) pour une période de temps du mouvement du premier véhicule (1) sur la première voie (11) de sorte que les deuxièmes données (D2) sont associées à une position géographique du premier véhicule (1) à laquelle les deuxièmes données respectives (D2) ont été mesurées,
- fournir une interface pour le deuxième dispositif de traitement (21) d'un deuxième véhicule à moteur (2) pour récupérer les premières et deuxièmes données (D1, D2) à partir de la base de données (33) au deuxième dispositif de traitement (21) du deuxième véhicule (2) pour fournir une information à une interface utilisateur (23) du deuxième véhicule (2) sur la base des premières et deuxièmes données récupérées (D1, D2).

6. Le procédé selon la revendication 5, dans lequel les deuxièmes données (D2) sont en outre indicatives d'au moins l'un parmi : un couple moteur, une vitesse de véhicule, une autonomie en carburant, un angle de volant, une direction de conduite, un état des freins, et un mouvement du premier véhicule sans rotation de roue pendant le mouvement du premier véhicule (1) sur la première voie (11).

7. Un produit de programme informatique comprenant des sections de code logiciel qui sont configurées pour exécuter un procédé selon l'une des revendications 1 à 6.

8. Un système (100) pour traiter des données relatives à un véhicule à moteur (1, 2), comprenant :
- un dispositif de traitement (21) configuré pour récupérer, en ce qui concerne un premier véhicule (1) qui est un véhicule à moteur, à partir d'une base de données (33), des premières données (D1) qui sont indicatives de positions géographiques du premier véhicule (1) enregistrées pendant le mouvement du premier véhicule (1) sur une première voie (11),
- le dispositif de traitement (21) étant configuré pour récupérer des deuxièmes données (D2) à partir de la base de données (33) qui sont indicatives d'au moins un angle de roulis et de tangage du premier véhicule (1) enregistré pendant le mouvement du premier véhicule (1) sur la première voie (11) et associé aux premières données (D1),
- le dispositif de traitement (21) étant configuré pour fournir pour un deuxième véhicule (2), qui est un véhicule à moteur et différent du premier véhicule (1), au moins une corrélation technique entre les deuxièmes données récupérées (D2) et un ou plusieurs paramètres techniques spécifiques au véhicule associés au deuxième véhicule (2),
- le dispositif de traitement (21) étant configuré pour fournir une information à une interface utilisateur (23) sur le deuxième véhicule (2) qui est indicative de l'au moins une corrélation technique,
- **caractérisé en ce que** le dispositif de traitement (21) est configuré pour fournir au moins une partie de l'information à l'interface utilisateur (23) du deuxième véhicule (2) sous la forme d'une notation dynamique basée sur un niveau de risque utilisateur préalablement saisi par l'utilisateur du deuxième véhicule (2).

9. Le système selon la revendication 8, dans lequel au moins une partie du dispositif de traitement (21) est comprise dans le deuxième véhicule (2).

10. Le système selon l'une des revendications 8 et 9, dans lequel au moins une partie d'au moins l'un du dispositif de traitement (21) et de la base de données (33) est respectivement mise en œuvre dans une ou plusieurs ressources du système informatique (3) accessibles par Internet (40), étant notamment mise en œuvre sur un système informatique serveur accessible par Internet (40).

11. Le système selon l'une des revendications 8 à 10, dans lequel le ou les plusieurs paramètres techniques spécifiques au véhicule comprennent au moins l'un parmi : un angle maximal de roulis et de tangage, un couple moteur maximal, une autonomie maximale en carburant, un angle maximal du volant, une force de freinage maximale et une vitesse maximale du véhicule pour le deuxième véhicule (2), les valeurs maximales respectives étant spécifiées dans une spécification du deuxième véhicule (2).

12. Le système selon l'une des revendications 8 à 11, dans lequel le ou les plusieurs paramètres techniques spécifiques au véhicule comprennent au moins l'un parmi : un angle de roulis et de tangage, un couple moteur, une autonomie de carburant, un angle de volant, une force de freinage, et une vitesse de véhicule enregistrée pour le deuxième véhicule (2) au cours d'un mouvement précédent du deuxième véhicule (2).

13. Un véhicule à moteur (2) comprenant une unité de commande (20) qui comprend un système (100) selon l'une des revendications 8 à 12.
